# EUROPEAN PATENT SPECIFICATION

(11) **EP 2 383 028 B1**
(45) Date of publication and mention of the grant of the patent: **01.07.2015**
(21) Application number: 09834959.0
(22) Date of filing: 24.12.2009
(51) Int. Cl.: B01D 39/20, C04B 38/00, F01N 3/02, F01N 3/28, B01D 46/24, F01N 3/022, C04B 111/00

(54) **HONEYCOMB STRUCTURE, AND FILTER AND EXHAUST GAS TREATMENT DEVICE USING SAME**
WABENSTRUKTUR UND DIESE VERWENDENDE FILTER UND ABGASBEHANDLUNGSVORRICHTUNG
STRUCTURE ALVÉOLAIRE, ET FILTRE ET DISPOSITIF DE TRAITEMENT DES GAZ D'ÉCHAPPEMENT UTILISANT LADITE STRUCTURE

(30) Priority: 25.12.2008 JP 2008329127
(43) Date of publication of application: 02.11.2011
(73) Proprietor: Kyocera Corporation, Kyoto-shi Kyoto 612-8501 (JP); Honda Motor Co., Ltd., Minato-ku Tokyo 107-8556 (JP)
(72) Inventor: TOKUDOME,Osamu, Kirishima-shi Kagoshima 899-4396 (JP)
(74) Representative: Banzer, Hans-Jörg
(86) International application number: PCT/JP2009/071469
(87) International publication number: WO 2010/074161

(56) References cited:
- EP-A1- 2 158 956
- WO-A1-2004/113252
- WO-A1-2007/108428
- WO-A1-2008/078799
- JP-A- 2007 153 660
- JP-A- 2008 212 917
- JP-A- 2008 231 932
- JP-A- 2009 236 028
- US-A1- 2008 070 776

## Description

### Technical Field

The present invention relates to a honeycomb structure used in a filter that captures particulates containing carbon as a main component contained in an exhaust gas emitted from an internal combustion engine, a incinerating furnace, a boilers and the like that are power sources of an automobile, a fork lift, an electric generator, a ship, a hydraulic shovel, a bulldozer, a wheel loader, a rough terrain crane, a tractor, a combine, a power tiller, construction vehicle and the like, a filter that decomposes and removes toxic dioxin, or a filter that filtrates a liquid such as city water or sewerage; and to a filter and an exhaust gas treatment device, using the same.

### Background Art

Heretofore, a filter using a honeycomb structure has been mounted for the purpose of capturing particulates containing carbon as a main component (particularly particulates containing carbon as a main component in an exhaust gas of a diesel engine) that contained in an exhaust gas emitted from an internal combustion engine, an incineration furnace, a boiler and the like. The particulates are removed by adsorbing on the filter since they may cause environmental pollution.

The honeycomb structure to be used in such a filter includes, for example, a plurality of flow paths separated from each other by a partition wall made of ceramics, the flow paths extending from one end to the other end in a uniaxial direction. These plural flow paths also include plugging members plugging either one end or the other end of plural flow paths alternately. An exhaust gas introduced through flow paths, that are open at on end of a honeycomb structure, enters into the adjacent flow path through a partition wall and discharged through the flow path that is open at the other end. Then, particulates containing carbon as a main component in the exhaust gas are captured on the partition wall when the exhaust gas passes through the partition wall.

Since air permeability gradually deteriorates when such capturing is continued, the honeycomb structure must be periodically regenerated according to the amount of particulates captured. The method of regenerating the honeycomb structure includes, for example, a method in which particulates captured on a partition wall undergoes ignition and combustion by heating using an electric heater disposed at an end face of the honeycomb structure. When such a method is employed, a gas for regeneration, such as air is introduced into the honeycomb structure.

When the honeycomb structure is regenerated by the aforementioned method, the temperature of the center of the honeycomb structure is likely to remarkably increase as a result of accumulation of heat, and thus the honeycomb structure may be sometimes damaged due to heat.

There also arose a problem that the temperature is less likely to raise towards the center since heat is released outside in the outer peripheral side of the honeycomb structure, and the temperature may sometimes descend to the ignition temperature or lower, resulting in formation of unfired particulates, and thus it is impossible to uniformly combust and remove particulates captured on the partition wall.

In order to suppress such damage due to heat, Patent Document 1 proposes a honeycomb structure including a lot of flow paths separated from each other by a partition wall, that pierce through in an axial direction, the honeycomb structure containing refractory particles and metallic silicon serving as an aggregate, being porous, and having a mean pore size within a range from 2 to 50 µm.

The document EP1538133 describes a honeycomb structure having a mean pore size of 5 to 100 micrometers.

### Prior Art Documents

### Patent Documents

Patent Document 1: JP-A-2002-201082

### Disclosure of the Invention

### Problems to be Solved by the Invention

Even when the honeycomb structure proposed in Patent Document 1 is used in a filter, local heat generation causing damage of the filter does not arise. However, since the range of the mean pore size is wide, such as 2 to 50 µm and also variation in a pore diameter is not sufficiently controlled, it was impossible to avoid a problem that particulates captured in the outer peripheral side of the honeycomb structure are likely to be unburned.

In light of these problems, an object of the present invention is to provide a honeycomb structure that suppresses damage due to heat when the honeycomb structure is regenerated by heating, and is less likely to form unburned particulates that are captured on a partition wall in the outer peripheral side, and a filter and an exhaust gas treatment device, using the same.

### Means for Solving the Problems

The honeycomb structure of the present invention includes a plurality of flow paths separated from each other by a partition wall including a wall face along an axial direction; plugging members plugging one end and the other end of the plurality of flow paths alternately; and an outer wall disposed on the outer peripheral side of the plurality of flow paths, wherein the partition wall is a porous material having a mean pore size of 5 µm or more and 28 µm or less and a half-value width relative to the mean pore size in a pore distribution curve of 25 µm or less (excluding 0 µm).

Since the honeycomb structure of the present invention includes a plurality of flow paths separated from each other by a partition wall including a wall face along an axial direction; plugging members plugging one end and the other end of the plurality of flow paths alternately; and an outer wall disposed on the outer peripheral side of the plurality of flow paths, wherein the partition wall is a porous material having a mean pore size of 5 µm or more and 28 µm or less and a half-value width relative to the mean pore size in a pore distribution curve of 25 µm or less (excluding 0 µm), the mechanical strength is maintained and an increase in pressure loss is suppressed. Also, heat is likely to be transferred toward the outer peripheral side from the center side of the honeycomb structure because of less variation in a pore diameter, and thus damage due to heat can be suppressed and also combustion and removal of particulates captured on a partition wall can be allowed to quickly proceed.

### Brief Description of the Drawings

Fig. 1 schematically shows an example of embodiments of a honeycomb structure of the present invention, in which Fig. 1(a) is a perspective view, Fig. 1(b) is a sectional view taken along lines B-B' in Fig. 1(a).
Fig. 2 shows a sectional view of the honeycomb structure of the example shown in Fig. 1, in which Fig. 2(a) is a side view of the input side of the honeycomb structure and Fig. 2(b) is a side view of the output side.
Fig. 3 is a graph showing an example of a distribution curve of pores existing on a partition wall that constitutes a honeycomb structure of the present invention, in which abscissas and ordinate respectively denote a pore diameter (unit is µm) and a differential pore volume (unit is cm³/g).
Fig. 4 shows another example of embodiments of the honeycomb structure, in which Fig. 4(a) is a side view of the input side and Fig. 4(b) is a side view of the output side.
Fig. 5 shows another example of embodiments of the honeycomb structure, in which Fig. 5(a) is a side view of the input side and Fig. 5(b) is a side view of the output side.
Fig. 6 is a schematic sectional view showing a filter using the honeycomb structure of the present invention and an example of embodiments of an exhaust gas treatment device provided with the filter.

### Mode for Carrying Out the Invention

Modes for carrying out the present invention will be described in detail with reference to the accompanying drawings.

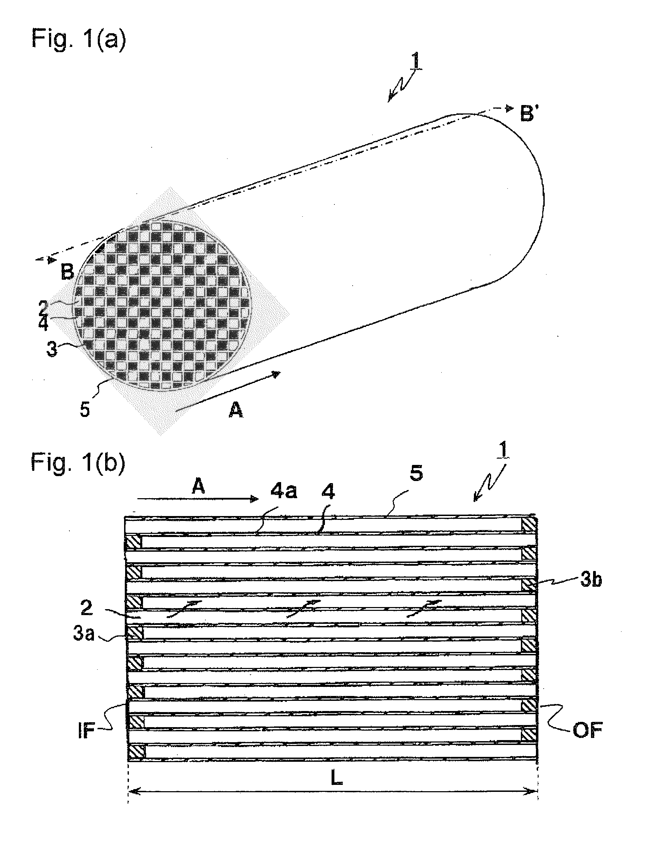

Fig. 1 schematically shows an example of embodiments of a honeycomb structure of the present invention, in which Fig. 1(a) is a perspective view and Fig. 1(b) is a sectional view taken along lines B-B' in Fig. 1(a).

The honeycomb structure 1 of the present invention of the example shown in Fig. 1 is a honeycomb structure including a plurality of flow paths 2 separated from each other by a partition wall 4 including a wall face 4a along an axial direction; plugging members 3 plugging one end and the other end of the plurality of flow paths alternately; and an outer wall 5 disposed on the outer peripheral side of the plurality of flow paths 2.

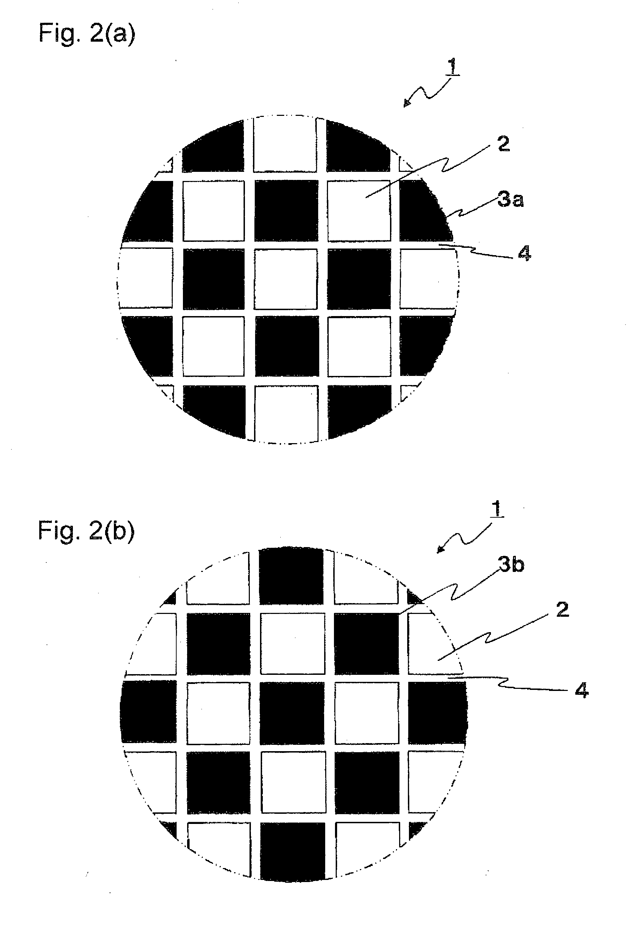

Fig. 2 shows another example of embodiments of the honeycomb structure shown in Fig. 1, in which Fig. 2(a) is a side view of the input side and Fig. 2(b) is a side view of the output side.

As shown in Fig. 2, plugging members 3a, 3b are, for example, disposed in a checkered pattern and an exhaust gas containing particulates that contains carbon as a main component (hereinafter simply referred to as particulates) is introduced through input side flow paths 2 that are open, and flow toward the direction indicated by arrow of an axial direction shown in Fig. 1. When the exhaust gas passes through a partition wall 4, particulates are captured on the partition wall 4 and the purified exhaust gas is discharged out through flow paths 2 that are open at the other end.

The honeycomb structure 1 of the example shown in Figs. 1 and 2 has, for example, a columnar shape in which an outer diameter is from 100 to 200 mm and a length in an axial direction A is from 100 to 250 mm, and the number of flow paths 2 in a cross section perpendicular to an axial direction A is from 5 to 124 (50 to 800 CPSI) per 100 mm². The partition wall 4 has a width of 0.05 mm or more and 0.25 mm or less, and the plugging member 3 has a thickness of 1 mm or more and 5 mm or less.

In the honeycomb structure 1 of the present invention, mechanical properties and the degree of an increase in pressure loss vary depending on the mean pore size of the porous material constituting the partition wall 4. When the mean pore size is small, mechanical properties are improved but an increase in pressure loss increases. In contrast, when the mean pore size is large, mechanical properties deteriorate but an increase in pressure loss decreases. Depending on variation in a pore diameter of the porous material constituting the partition wall 4 of the honeycomb structure 1, the degree of damage due to heat and the degree of proceeding of combustion and removal of particulates captured on partition wall 4 vary. As variation in a pore diameter decreases, heat is transferred more quickly in the honeycomb structure 1. Therefore, damage due to heat can be suppressed, and also combustion and removal of particulates captured on the partition wall 4 can be allowed to process quickly.

From such a point of view, in the honeycomb structure 1 of the present invention, it is important that the partition wall 4 is made of a porous material in which a mean pore size is 5 µm or more and 28 µm or less, and a half-value width to the mean pore size in a pore distribution curve is 25 µm or less (excluding 0 µm). An increase in a pressure loss in the honeycomb structure 1 can be decreased to, for example, 6 kPa or less by adjusting the mean pore size to 5 µm or more, and the compression failure strength as one of mechanical properties of the honeycomb structure 1 can be increased to, for example, 5 MPa or more by adjusting the mean pore size to 28 µm or less.

With respect to pressure loss of the honeycomb structure 1, pressure loss of the output end face (OF) to the input end face (IF) may be measured, for example, by a manometer and the measured value may be regarded as pressure loss of the honeycomb structure 1.

The compression failure strength of the honeycomb structure 1 may be measured, for example, according to JASO M 505-87 and a sample obtained by cutting off a cube measuring 10 mm in length of one side from the honeycomb structure 1 may be used as a measuring sample.

The half-value width to the mean pore size in a pore distribution curve means variation in a pore diameter and heat is easily transferred toward the outer peripheral side from the center side of the honeycomb structure 1 by adjusting the half-value width to 25 µm or less (excluding 0 µm), and thus damage due to heat can be suppressed and also combustion and removal of particulates captured on the partition wall 4 can be allowed to proceed quickly.

In particular, this half-value width is preferably 3.5 µm or less, and more preferably 1.5 µm or less.

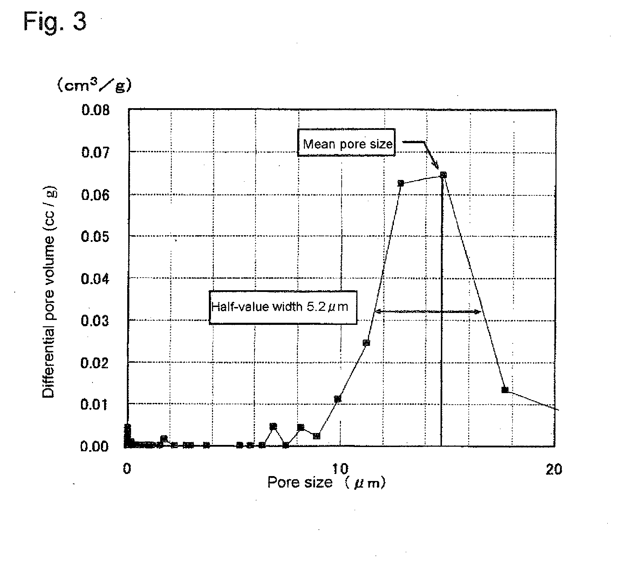

Fig. 3 is a graph showing an example of a distribution curve of pores that exist in a partition wall constituting the honeycomb structure of the present invention, in which abscissas and ordinate respectively denote a pore diameter (unit is µm) and a differential pore volume (unit is cm³/g) of pores each existing on the partition wall. Herein, the differential pore volume means the amount of a change in a pore volume to that in a pore diameter and is commonly represented by ΔV/(ALogd), in which V and d respectively denote a pore volume (cm³/g) and a pore diameter (µm).

According to a pore distribution curve shown in Fig. 3, a mean pore size of the partition wall 4 is 14.8 µm, a half-value width to this mean pore size is 5.2 µm, and these mean pore size and half-value width can be determined according to a mercury injection method, using a pore distribution analyzer (for example, AutoPore IV 9500 Series such as AutoPore IV 9505, manufactured by Micromeritics Instrument Corporation). Herein, the half-value width means a width of the pore diameter in a half value of a differential pore volume, which shows a mean pore size, and may be measured under the conditions of a pressure of mercury to be injected into pores of 3.59 KPa, a contact angle of mercury of 130°, a density of 13.5335 g/cm³ and a surface tension of 0.485 N/m, respectively.

In the honeycomb structure 1 of the present invention, mechanical properties and the degree of an increase in pressure loss vary depending on the porosity of the porous material constituting the partition wall 4. When the porosity is low, mechanical properties are improved but the degree of an increase in pressure loss increases. In contrast, when the porosity is high, mechanical properties deteriorate but the degree of an increased in pressure loss decreases.

From such a point of view, in the honeycomb structure 1 of the present invention, the porous material constituting the partition wall 4 has preferably a porosity of 32% or more and 58% or less. Since the exhaust gas easily passes through the partition wall 4 by adjusting the porosity within the above range, an increase in pressure loss of the honeycomb structure 1 can be decreased to, for example, 5 kPa or less. Also, since mechanical properties of the partition wall 4 are not impaired, the partition wall 4 enables the compression failure strength of honeycomb structure 1 to increase to, for example, 6 MPa or more.

The porosity of the porous material constituting the partition wall 4 can be determined according to a mercury injection method.

In the honeycomb structure 1 of the present invention, the way to transfer heat to the outer peripheral side from the center side varies depending on a magnitude correlation between the mean pore size of pores located on the center side of the porous material constituting the partition wall 4 and the mean pore size of pores located on the outer peripheral side. In the porous material constituting the partition wall 4, when the mean pore size on the center side is less than that on the outer peripheral side, heat is not easily transferred to the outer peripheral side. In contrast, when the mean pore size on the outer peripheral side is less than that on the center side, heat is easily transferred to the outer peripheral side. From such a point of view, in the porous material constituting the partition wall 4, the mean pore size on the outer peripheral side is preferably less than that on the center side. In the porous material constituting the partition wall 4, when the mean pore size on the outer peripheral side is less than that on the center side, heat is easily transferred to the outer peripheral side. In a state where the outer peripheral face is coated with a heat insulating material layer, since heat use for regeneration is not easily released to the outside and heat is accumulated on the outer peripheral side, unburned particulates that are captured on the partition wall 4 are more less likely to be generated even on the outer peripheral side.

It is particularly suitable that the mean pore size of the porous material constituting the partition wall 4 located on the outermost periphery is at least 2 µm smaller than that of the porous material constituting the partition wall 4 located on the center.

In the honeycomb structure 1 of the present invention, the porous material constituting the partition wall 4 is made of a sintered body containing, as a main component, cordierite, aluminum titanate, silicon carbide, silicon nitride, alumina, mullite, lithium aluminum silicate, spodumene or the like, and particularly preferably a sintered body containing aluminum titanate as a main component. This reason is that high long-term reliability can be achieved since aluminum titanate has high impact resistance.

The main component of the porous material constituting the partition wall 4 in the present invention means a component that accounts for 50% by mass or more of the components that constitute this porous material. This component can be identified by an X-ray diffraction method and the content of the component can be determined by inductively coupled plasma (ICP) spectroscopy or fluorescent X-ray spectroscopy.

In the honeycomb structure 1 of the present invention, when the plugging member 3 is formed of a porous material, the amount of leak of the exhaust gas can be varied depending on the mean pore size of the porous material constituting the plugging member 3. As the mean pore size of the porous material constituting the plugging member 3 becomes closer to that of the porous material constituting the partition wall 4, it become easy to make a shrinkage ratio of the porous material constituting the plugging members 3 identical to that of the porous material constituting the partition wall 4 in the firing step. As a result, since a microgap that is likely to be formed between the plugging members 3 and the partition wall 4 can be suppressed, the amount of the exhaust gas to be leaked from the gap decreases and capturing efficiency of particulates on a surface inside the plugging members 3 can be increased.

In the honeycomb structure 1, reliability of capturing of particulates on a surface inside the plugging members 3 varies depending on variation in a pore diameter of the porous material constituting the plugging member 3. As variation in a pore diameter of the porous material constituting the plugging member 3 decreases, pores having an abnormally large pore diameter decreases, and thus capturing efficiency of particulates on a surface inside the plugging member 3 can be increased.

From such a point of view, in the honeycomb structure 1 of the present invention, it is suitable that the plugging member 3 is made of a porous material in which a mean pore size is 5 µm or more and 28 µm or less, and a half-value width to the mean pore size in a pore distribution curve is 25 µm or less (excluding 0 µm).

When the plugging member 3 is made of a porous material in which a mean pore size is 5 µm or more and 28 µm or less, and a half-value width to the mean pore size in a pore distribution curve is 25 µm or less (excluding 0 µm), since a microgap that is likely to be formed between the plugging members 3 and the partition wall 4 can be suppressed, the amount of the exhaust gas to be leaked from the gap decreases and capturing efficiency of particulates on a surface inside the plugging members 3 can be increased.

The mean pore size, the pore distribution curve and the half-value width of the plugging member 3 are also determined according to the aforementioned mercury injection method.

In the honeycomb structure 1 of the present invention, the mass and mechanical properties of plugging member 3 vary depending on the porosity of the porous material constituting the plugging member 3. When the porosity is low, the area occupied by a grain boundary phase increased, and thus mechanical properties of the plugging member 3 are improved. In contrast, when the porosity is high, the mass can be decreased and thus fuel consumption can be improved.

From such a point of view, in the honeycomb structure 1 of the present invention, it is suitable that the porous material constituting the plugging member 3 has a porosity of 32% or more and 58% or less. By adjusting the porosity within this range, the area occupied by a grain boundary phase and the mass of the plugging member 3 can be adjusted within a proper range, and thus mechanical properties can be improved and also fuel consumption can be improved.

The porosity of the porous material constituting the plugging member 3 can be determined according to the aforementioned mercury injection method.

In the honeycomb structure 1 of the present invention, the way to transfer heat to the outer peripheral side from the center side varies depending on a magnitude correlation between the mean pore size of pores located on the center side of the porous material constituting the plugging member 3 and the mean pore size of pores located on the outer peripheral side. In the porous material constituting the plugging member 3, when the mean pore size on the center side is less than that on the outer peripheral side, heat is not easily transferred to the outer peripheral side. In contrast, when the mean pore size on the outer peripheral side is less than that on the center side, heat is easily transferred to the outer peripheral side. From such a point of view, in the porous material constituting the plugging member 3, the mean pore size on the outer peripheral side is preferably less than that on the center side. In the porous material constituting the plugging member 3, when the mean pore size on the outer peripheral side is less than that on the center side, heat is easily transferred to the outer peripheral side. In a state where the outer peripheral face is coated with a heat insulating material layer, since heat use for regeneration is not easily released to the outside and heat is accumulated on the outer peripheral side, unburned particulates that are captured on the plugging member 3 are more less likely to be generated even on the outer peripheral side.

It is particularly suitable that the mean pore size of the porous material constituting the plugging member 3 located on the outermost periphery is at least 2 µm smaller than that of the porous material constituting the plugging member 3 located on the center.

In the honeycomb structure 1 of the present invention, the porous material constituting the plugging member 3 is made of a sintered body containing, as a main component, cordierite, aluminum titanate, silicon carbide, silicon nitride, alumina, mullite, lithium aluminum silicate, spodumene or the like, and particularly preferably a sintered body containing aluminum titanate as a main component. This reason is that high long-term reliability can be achieved since aluminum titanate has high impact resistance.

The main component of the porous material constituting the plugging member 3 in the present invention means a component that accounts for 50% by mass or more of the components that constitute this porous material. This component can be identified by an X-ray diffraction method and the content of the component can be determined by inductively coupled plasma (ICP) spectroscopy or fluorescent X-ray spectroscopy.

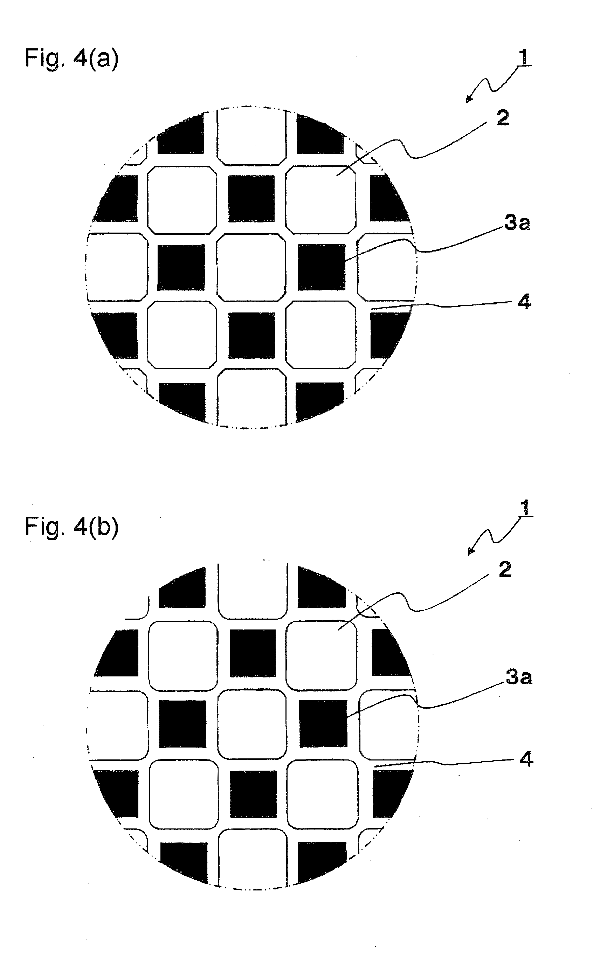

Fig. 4 shows another example of embodiments of the honeycomb structure of the present invention, in which Fig. 4(a) is a side view of the input side Fig. 4(b) is a side view of the output side.

In the honeycomb structure of the example shown in Fig. 4, opened flow paths 2 and plugged flow paths 2 on the input side end face respectively have an octagon shape and a tetragon shape, and the area of the opened flow paths 2 is larger than that of the plugged flow paths 2.

With such a constitution, it is possible to make the surface area of the partition wall 4, that capture particulates, larger than that in case the shape of flow paths 2 is only a tetragon shape as shown in Fig. 2, and thus the amount of particulates captured can be increased. Since the open area of flow paths 2 on the input side can be more widen, particulates easily enter in flow paths 2 and can be suitably captured.

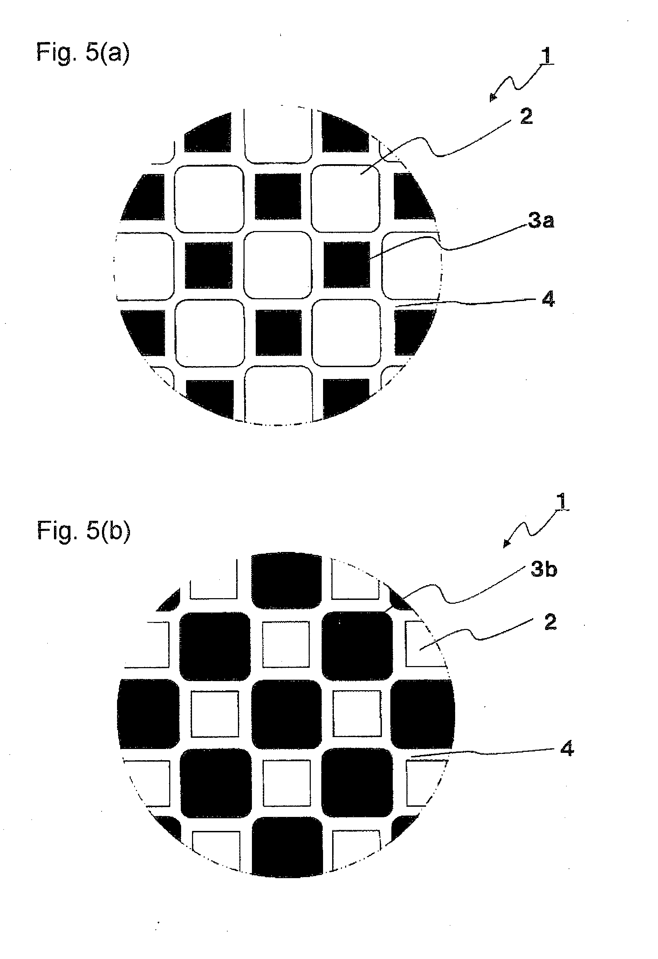

Fig. 5 shows another example of embodiments of the honeycomb structure, in which Fig. 5(a) is a side view of the input side and Fig. 5(b) is a side view of the output side.

In the honeycomb structure of the example shown in Fig. 5, any of opened flow paths 2 and plugged flow paths 2 on the input side end face has a tetragon shape, and the opened flow paths 2 have an area larger than that of plugged flow paths 2 and have corner portions formed in a circular arc shape.

With such a constitution, it is possible to make the surface area of the partition wall 4, that capture particulates, larger than that in case the shape of flow paths 2 is only a tetragon shape as shown in Fig. 2, and thus the amount of particulates captured can be increased. Since the open area of flow paths 2 on the input side can be more widen, particulates easily enter in flow paths 2 and can be suitably captured. Furthermore, since the corner portion has a circular arc shape, stress generated at the corner portion is easily distributed and cracks starting from the corner portion are less likely to arise.

Particularly in the honeycomb structure 1 of the example shown in Fig. 5, it is suitable that the hydraulic diameter of opened flow paths 2 on the input side end face is 1.55 times or more and 1.95 times or less the hydraulic diameter of plugged flow paths 2. In this way, by adjusting the ratio of the hydraulic diameter to 1.55 times or more, the amount of particulates captured can be increased. Since the partition wall 4 is not excessively thinned by adjusting the ratio of the hydraulic diameter to 1.95 times or less, the strength can be ensured. Herein, the hydraulic diameter of flow paths 2 means the diameter of an inscribed circle in contact with a tetragon shape surrounded by the partition wall 4 when the input side or output side of the partition wall 4 is viewed planarly, and can be measured using an optical microscope.

In the honeycomb structure 1 of the present invention, flow paths 2 can have, in addition to shapes shown in Figs. 2, 3 and 4, various shapes such as a circular shape, various square shapes, a tetragon shape with a corner portion having a circular arc shape, or a combination of a tetragon shape and an octagon shape. In one honeycomb structure 1, flow paths 2 each having a different planar shape may simultaneously exist.

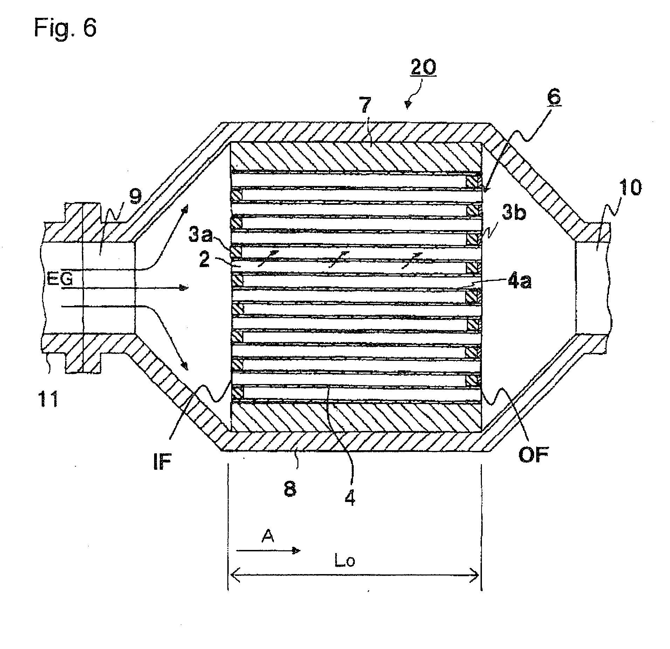

Fig. 6 is a schematic sectional view showing a filter using the honeycomb structure of the present invention and an example of embodiments of an exhaust gas treatment device provided with the filter.

The filter of the present invention of the example shown in Fig. 6 is a filter 6 in which a catalyst (not shown) is supported on a wall face 4a of the partition wall 4 of the honeycomb structure 1 of the present invention, and an exhaust gas (EG) is passed through the filter from non-plugged one end of flow paths 2, as an input, to the non-plugged other end of flow paths 2, as an output, separated from the flow paths 2 via a partition wall 4 interposed therebetween, thereby capturing particulates in the exhaust gas on the partition wall 4.

The catalyst supported on the wall face 4a of the partition wall 4 is used for oxidizing and combusting particulates in the exhaust gas captured on the partition wall 4 by feeding a vaporized gas of a fuel such as light oil. For example, the catalyst to be used is preferably at least one selected from platinum group metals such as ruthenium (Ru), rhodium (Rh), palladium (Pd), osmium (Os), iridium (Ir) and platinum (Pt), and particularly preferably platinum (Pt) having high oxidation activity. Furthermore, at least one selected from alkali metals, alkali earth metals and rare earth metals may be supported on the wall face 4a so as to adsorb nitrogen oxide (NOₓ).

The exhaust gas treatment device of the present invention of the example shown in Fig. 6 is an exhaust gas treatment device 20 provided with the filter 6 of the present invention, and the filter 6 is housed in a casing 8 in a state where the outer peripheral face is coated with a heat insulating material layer 7. The casing 8 is made of, for example, stainless steels such as SUS303, SUS304 and SUS316, and the center is formed into a cylindrical shape and both ends are respectively formed into a circular truncated cone shape, and also an input side and an output side of an exhaust gas (EG) are respectively an inlet port 9 and an outlet port 10. To the inlet port 9 of the casing 8, an exhaust pipe 11 is connected, thereby introducing the exhaust gas (EG) into the casing 8 through the exhaust pipe 11.

The heat insulating material layer 7 is formed into a mat shape and is preferably made of, for example, at least one kind of a ceramic fiber, a glass fiber, a carbon fiber and a ceramic whisker.

When a diesel engine (not shown) is operated and an exhaust gas (EG) is introduced into the casing 8 through the exhaust pipe 11, the exhaust gas (EG) is introduced into non-plugged flow paths 2 from an input end face (IF) of a honeycomb structure 1. Since the end of the side of an output end face (OF) of the flow paths 2, into which the exhaust gas (EG) was introduced, are plugged, the exhaust gas (EG) is prevented from flowing out and thus the exhaust gas (EG) passed through a porous partition wall 4 and then discharged through adjacent flow paths 2 whose side of the output end face (OF) are not plugged. In the partition wall 4, particulates in the exhaust gas (EG) are captured in pores inside the partition wall. Namely, purified air is introduced into the adjacent flow paths 2. Since the side of the input end face (IF) of the adjacent flow paths 2 is plugged, the exhaust gas (EG) is not mixed in the purified air. In this way, the exhaust gas (EG) introduced into the honeycomb structure 1 of an exhaust gas treatment device 20 is purified into a state of containing no particulates and then discharged to the outside from the output end face (OF).

In this way, since the exhaust gas treatment device 20 of the present invention is provided with the filter of the present invention, particulates can be efficiently captured over a long period and thus the device can be efficiently used over a long period.

In the exhaust gas treatment device 20 of the present invention of the example shown in Fig. 6, it is suitable that the length (L₁) in an axial direction of the region that is not coated with heat insulating material layer 7 at the input side of the exhaust gas (EG) is 1/15 or less of the full length (L₀) in an axial direction A of the filter 6.

When the exhaust gas treatment device 20 is used or regenerated, there arises a difference in temperature between the vicinity of the region that is not coated with heat insulating material layer 7 at the input side of the exhaust gas (EG) and the region that is coated with heat insulating material layer 7. When the length is adjusted to 1/15 or less of the full length in an axial direction A of the filter 6, this temperature difference is sufficiently suppressed, and thus an influence of the residual thermal stress is less likely to be exerted and cracks that generate on the end face at the input side of the honeycomb structure can be reduced.

While the case where exhaust gas treatment device 20 is provided with the filter 6 of the present invention was explained, the filter can also be used in a treatment device of filtering a liquid.

An example of the method of producing the honeycomb structure 1 of the present invention will be described below.

The mean pore size of the porous material constituting the partition wall 4 is largely influenced by the mean particle size D₅₀ of a ceramic powder to be used. The mean pore size is small when the mean particle size D₅₀ is small, whereas, the mean pore size becomes large when the mean particle size D₅₀ is large.

The half-value width to the mean pore size in a pore distribution curve is largely influenced by cumulative particle size distribution of the ceramic powder. The half-value width is wide when the cumulative particle size distribution is narrow, whereas, the half-value width becomes narrow when the cumulative particle size distribution is wide.

In order to adjust the mean pore size of the porous material to 5 µm or more and 28 µm or less and to adjust the half-value width to the mean pore size in the pore distribution curve to 25 µm or less (excluding 0 µm), a difference between the particle size D₉₀ and the particle size D₁₀ ΔD (= D₉₀ - D₁₀) may be adjusted to 1.9 µm or more assumed that the mean particle size of the ceramic powder is 13.5 µm or more and 102 µm or less, particle sizes in 10% cumulative and 90% cumulative from the smaller particle side of cumulative particle size distribution of ceramic powder are D₁₀ and D₉₀, respectively.

ΔD may be adjusted to 32 µm or more so as to adjust the half-value width to the mean pore size to 3.5 µm or less, and ΔD may be adjusted to 110 µm or more so as to adjust the half-value width to the mean pore size to 1.5 µm or less.

When the porous material constituting the partition wall 4 is made of a sintered body containing aluminum titanate as a main component, a compounded material may be obtained by adding 1 part by mass or more and 10 parts by mass or less of each of powders of magnesium oxide (MgO) and silicon dioxide (SiO₂) to 100 parts by mass of a powder of aluminum titanate.

Herein, in place of magnesium oxide (MgO), either an oxide having a spinel type structure containing Mg or a Mg-containing compound that is converted into MgO by firing may be used.

After adding a predetermined amount of a pore forming agent such as graphite, starch or a resin powder to the compounded material obtained as described above, a plasticizer, a thickener, a lubricant, water and the like are added to obtain a mixture, using a universal mixer, a rotary mill or a type V mixer.

The porosity of the porous material constituting the partition wall 4 is largely influenced by the additive amount of the pore forming agent. The porosity is high when the additive amount of the pore forming agent is large, whereas, the porosity becomes low when the additive amount of the pore forming agent is small.

In order to adjust the porosity of the porous material constituting the partition wall 4 to 32% or more and 58% or less, the additive amount of the pore forming agent may be adjusted to 1% by mass or more and 13% by mass or less based on 100% by mass of the compounded material when the below-mentioned firing temperature is adjusted to, for example, 1,480°C.

Then, the obtained mixture is kneaded using a three-roll mill, kneader or the like to obtain a plasticized kneaded mixture.

Next, the obtained plasticized kneaded mixture is formed using an extrusion molding machine. A die is mounted in this extrusion molding machine and this die has an inner diameter, from which an outer diameter of a green compact is determined, of 100 m or more and 250 mm or less and includes a slit for forming a partition wall 4 of a honeycomb structure 1. The kneaded mixture is charged in the extrusion molding machine with this die mounted therein, and then formed into a honeycomb shape by applying a pressure. Thereafter, the obtained green compact was dried and cut into a predetermined length.

Next, a plugging member 3 where one end and the other end of a plurality of flow paths 2 of the green compact are alternately plugged is produced. Specifically, first, flow paths 2 that are open were subjected to masking so that the flow paths to be plugged on the output side are disposed in a checkered pattern. In advance, a slurry containing the compounded material and a pore forming agent added in the amount of 1% by mass or more and 13% by mass or more based on 100% by mass of the compounded material is prepared, and the masked output end face (the symbol OF in Fig. 2) is dipped in this slurry. Flow paths 2 having the non-masked output end face (OF) are provided with a tip portion coated with a water-repelling resin inserted from the input end face (the symbol IF in Fig. 2), and pins with a tip having a flat shape are inserted into flow paths 2 from the input end face (IF) in advance, and then the slurry penetrated into the flow paths 2 at the output side is dried at a normal temperature. Thus, a plugging member 3b is formed on the output side of the green compact. The pins are removed and the same operation as described above was carried out on the input side (IF) to form a plugging member 3a on the input side of the green compact.

Next, the obtained green compact is fired. Specifically, using a firing furnace such as an electric furnace or a gas burning furnace, the temperature is controlled to 1,250°C to 1,700°C, and then the green compact is fired by maintaining at this temperature for 0.5 hour to 5 hours.

The porous material that constitutes the partition wall 4 and the plugging member 3, in which the mean pore diameter on the outer peripheral side is made smaller than that on the center side, can be obtained by firing in a state where an aluminum oxide or zirconium hydroxide powder having the content of 99.5% by mass or more in contact with the outer wall of the green compact. When the firing temperature of the outer peripheral side is higher than that of the center side, sintering is promoted and the mean pore size becomes small.

According to the honeycomb structure 1 produced by the aforementioned method, the mechanical strength is maintained and an increase in pressure loss is suppressed. Also, heat is easily transferred toward the outer peripheral side from the center side of the honeycomb structure because of less variation in a pore diameter, and thus damage due to heat can be suppressed and also combustion and removal of particulates captured on a partition wall can be allowed to quickly proceed.

### Examples

Examples of the present invention will be specifically described below, but the present invention is not limited to the following Examples.

### (Example 1)

First, 5 parts by mass of each of powders of magnesium oxide (MgO) and silicon dioxide (SiO₂) was added to 100 parts by mass of a powder of aluminum titanate to obtain a compounded material.

Particle sizes D₁₀, D₅₀ and D₉₀ in 10% cumulative, 50% cumulative and 90% cumulative from the smaller particle side of cumulative particle size distribution of a powder of aluminum titanate, and a difference between a particle size D₉₀ and a particle size D₁₀ ΔD (= D₉₀ - D₁₀) are respectively as shown in Table 1. The particle size of the powder of a powder of aluminum titanate was measured according to JIS R 1619-1995.

To this compounded material, graphite was added as a pore forming agent in the amount of 10% by mass based on 100% by mass of the compounded material. Thereafter, a plasticizer, a thickener, a lubricant and water were further added to obtain a slurry, using a rotary mill. Using a kneader, the slurry obtained by the rotary mill was kneaded to obtain a plasticized kneaded mixture.

Next, the kneaded mixture was charged in an extrusion molding machine with a die mounted therein, that is 250 mm in an inner diameter from which an outer diameter of a green compact is determined, and includes a slit for forming a partition wall 4 of a honeycomb structure 1. Then, the kneaded mixture was formed into a honeycomb shape by applying a pressure. Thereafter, the obtained green compact was dried and cut into a predetermined length.

Next, a plugging member 3 where one end and the other end of a plurality of flow paths 2 of the green compact are alternately plugged was produced. Specifically, first, flow paths 2 that are open were subjected to masking so that the flow paths 2 to be plugged on the output side are disposed in a checkered pattern. In advance, a slurry containing the compounded material and a pore forming agent added in the amount of 10% by mass based on 100% by mass of the compounded material was prepared, and the masked output end face (the symbol OF in Fig. 2) was dipped in this slurry.

Flow paths 2 having the non-masked output end face (OF) are provided with a tip portion coated with a water-repelling resin inserted from the input end face (the symbol IF in Fig. 2), and pins with a tip having a flat shape are inserted into flow paths 2 from the input end face (IF) in advance, and then the slurry penetrated into the flow paths 2 at the output side is dried at a normal temperature. Thus, a plugging member 3b was formed on the output side of the green compact. The pins are removed and the same operation as described above was carried out on the input side (IF) to form a plugging member 3a on the input side of the green compact.

Using an electric furnace, the green compact was fired at 1,440°C for 4 hours to obtain samples Nos. 1 to 13 each having a honeycomb structure measuring 144 mm in n outer diameter and 156 mm in a length in a checkered pattern in which the input end face (IF) and the output end face (OF) are respectively shown in Figs. 5 (a) and 5(b).

The mean pore size and the half-value width of a porous material that respectively constitutes the partition wall 4 and the plugging member 3 were measured according to the aforementioned mercury injection method, using a sample cut-out from the outer peripheral side of the honeycomb structure. The respective measured value of the mean pore size and the half-value width of the partition wall 4 are shown in Table 1.

In Example 1, the mean pore size and the half-value width of the plugging member 3 of any sample were respectively 9 µm and 9.3 µm.

With respect to pressure loss of the honeycomb structure, a sample that is different from that of the aforementioned honeycomb structure was prepared, and each pressure loss of the output end face (OF) to the input end face (IF) was measured by a manometer. After the input end face (IF) of each sample was respectively connected to Carbon Generator (manufactured by KANOMAX JAPAN INC., Model S4102 not shown), dry air (at temperature 25°C) containing particulates was directly injected from Carbon Generator at a flow rate of 2.27 Nm³/minute, and pressure loss of the output end face (OF) to the input end face (IF) in the case of capturing 12 g of particulates based on the volume of 0.001 m³ of the honeycomb structure was measured by a manometer. The measured values were shown in Table 1.

The thus captured particulates were regenerated by combusting and removing by an electric heater.

In case the combustion temperature and the combustion time in this regeneration are adjusted to 700°C and 10 minutes, respectively, and also the amount of air fed to the honeycomb structure is adjusted to 0.07 m³/minute, the region of particulates unburned on the outer peripheral side in the input end face (IF) is expressed by a ratio (hereinafter, this ratio is referred to as a ratio R) of a maximum length in a radial direction where unburned particulates are observed, that starts from a given point in the outer peripheral face of the outer wall, to a diameter of the honeycomb structure. In Table 1, the ratio is described as a ratio R. The diameter of the honeycomb structure in the present Example is an arithmetic mean of a maximum diameter and a minimum diameter of the honeycomb structure in the input end face (IF).

The maximum length in a radial direction where unburned particulates are observed, that starts from a given point in the outer peripheral face of the outer wall, was measured using an optical microscope at a magnification of 100 times, and the diameter of the honeycomb structure was measured using a caliper.

A cube sample measuring 10 mm in length of one side was cut off from the center in an axial direction A of the honeycomb structure and the compression failure strength in an axial direction A of this sample was measured according to JASO M 505-87. The measured values are shown in Table 1.

**Table 1**

| No. | Particle size D₁₀ (µm) | Particle size D₅₀ (µm) | Particle size D₉₀ (µm) | Difference ΔD (µm) | Mean pore size (µm) | Half-value width (µm) | Ratio R(%) | Pressure loss (before capture) (kPa) | Pressure loss (after capture) (kPa) | Increase in pressure loss (kPa) | Compression failure strength (MPa) |
|---|---|---|---|---|---|---|---|---|---|---|---|
| *1 | 3.1 | 5.1 | 11.4 | 8.3 | 3 | 9.0 | 4.2 | 6 | 16 | 10 | 12.4 |
| 2 | 8 | 13.5 | 16.3 | 8.3 | 5 | 9.0 | 4.2 | 6 | 12 | 6 | 11.3 |
| 3 | 5.2 | 30.2 | 115.2 | 110 | 9 | 1.5 | 2.1 | 6 | 11 | 5 | 10.2 |
| 4 | 14.5 | 30.2 | 46.5 | 32 | 9 | 3.5 | 2.8 | 6 | 11 | 5 | 10.1 |
| 5 | 26 | 30.2 | 34 | 8 | 9 | 9.3 | 4.2 | 6 | 11 | 5 | 10 |
| 6 | 28.6 | 30.2 | 31.8 | 3.2 | 9 | 17.5 | 4.9 | 6 | 11 | 5 | 9.8 |
| 7 | 29.2 | 30.2 | 31.11 | 1.91 | 9 | 25.0 | 5.6 | 6 | 11 | 5 | 9.7 |
| *8 | 8 | 30.2 | 9.71 | 1.71 | 9 | 27.0 | 8.3 | 6 | 11 | 5 | 9.5 |
| 9 | 55.2 | 59.3 | 63.5 | 8.3 | 16 | 9.0 | 4.2 | 5 | 9 | 4 | 7 |
| 10 | 76.1 | 80.2 | 84.4 | 8.3 | 21 | 9.0 | 4.2 | 4 | 8 | 4 | 6 |
| 11 | 96.9 | 101.0 | 105.2 | 8.3 | 26 | 9.0 | 4.2 | 4 | 8 | 4 | 5 |
| 12 | 107 | 109.4 | 120 | 13 | 28 | 6.6 | 3.5 | 4 | 8 | 4 | 4.4 |
| *13 | 110.5 | 117.7 | 120.8 | 10.3 | 30 | 7.8 | 3.5 | 4 | 8 | 4 | 3.2 |

| | | | | | | | | | | | |
|---|---|---|---|---|---|---|---|---|---|---|---|
| * Samples departing from the scope of the present invention | | | | | | | | | | | |

As is apparent from the results shown in Table 1, sample No. 1 in which a partition wall 4 has a mean pore size of less than 5 µm exhibits a large increase in pressure loss such as 10 kPa.

It is also apparent that sample No. 13 in which a partition wall 4 has a mean pore size of more than 28 µm exhibits small compression failure strength such as 3.2 MPa.

It is also apparent, since sample No. 8 in which a half-value width to a mean pore size of a partition wall 4 is more than 25 µm exhibits a large ratio R such as 8.3%, a lot of unburned particulates exist on the outer peripheral side and regeneration is not efficiently carried out.

It is apparent that, since a partition wall made of a porous material, in which a mean pore size is 5 µm or more and 28 µm or less and a half-value width to a mean pore size in a pore distribution curve is 25 µm or less, is used in samples Nos. 2 to 7 and 9 to 12 of the present invention, samples exhibit a small increase in pressure loss such as 6 kPa or less and large compression failure strength such as 4.4 MPa or more. Furthermore, it is apparent, because of a small ratio R such as 5.6% or less, less unburned particulates exist on the outer peripheral side and regeneration is efficiently carried out.

It is apparent that samples Nos. 3 and 4 exhibits a small ratio R such as 2.1% or 2.8% since a half-value width to a mean pore size of a partition wall 4 is 1.5 µm or 3.5 µm, respectively, and thus lesser unburned particulates exist on the outer peripheral side and regeneration is more efficiently carried out.

### (Example 2)

A test of confirming a change in pressure loss and compression failure strength due to a change in porosity of a porous material constituting a partition wall 4 was carried out.

First, 5 parts by mass of each of powders of magnesium oxide (MgO) and silicon dioxide (SiO₂) was mixed with 100 parts by mass of a powder of aluminum titanate to obtain a compounded material.

Particle sizes D₁₀, D₅₀ and D₉₀ in 10% cumulative, 50% cumulative and 90% cumulative from the smaller particle side of cumulative particle size distribution of a powder of aluminum titanate were set to 11 µm, 26 µm and 64 µm, respectively, and the values were measured according to JIS R 1619-1995.

To this compounded material, graphite was added as a pore forming agent in the additive amount shown in Table 2 based on 100% by mass of the compounded material. Thereafter, a plasticizer, a thickener, a lubricant and water were further added to obtain a slurry, using a rotary mill. Then, the slurry obtained by the rotary mill was kneaded using a kneader to obtain a plasticized kneaded mixture.

Hereinafter, the method of forming a honeycomb structure 1 and the method of forming a plugging member 3 are the same as those described in Example 1.

Then, the obtained green compact was fired using an electric furnace at 1,480°C for 4 hours to obtain a honeycomb structure 1 measuring 144 mm in an outer diameter and 156 mm in a length in a checkered pattern in which the input end face (IF) and the output end face (OF) are respectively shown in Figs. 5 (a) and 5(b).

The porosity of a porous material constituting a partition wall 4 of the obtained honeycomb structure 1 was determined by according to a mercury injection method. The measured values are shown in Table 2.

The pressure loss and the compression failure strength of the honeycomb structure 1 were measured in the same manner as in Example 1. The measured values are shown in Table 2.

**Table 2**

| No. | Additive amount of pore forming agent (% by mass) | Porosity (%) | Pressure loss (before capture) (kPa) | Pressure loss (after capture) (kPa) | Increase in pressure loss (kPa) | Compression failure strength (kPa) |
|---|---|---|---|---|---|---|
| 14 | 0.5 | 30 | 6 | 13 | 7 | 13 |
| 15 | 1 | 32 | 5 | 10 | 5 | 11 |
| 16 | 7 | 45 | 5 | 8 | 3 | 7 |
| 17 | 13 | 58 | 4 | 6 | 2 | 6 |
| 18 | 15 | 60 | 4 | 6 | 2 | 4 |

As is apparent from the results shown in Table 2, samples Nos. 15 to 17 exhibits a small increase in pressure loss such as 5 kPa or less and high compression failure strength such as 6 MPa or more since the porous material constituting the partition wall 4 has a porosity of 32% or more and 58% or less.

### (Example 3)

A test of confirming a change in a ratio R caused by the fact that the mean pore size of the porous material constituting the partition wall 4 on the outer peripheral side is less than that on the center side was carried out.

First, 5 parts by mass of each of powders of magnesium oxide (MgO) and silicon dioxide (SiO₂) was added to 100 parts by mass of a powder of aluminum titanate to obtain a compounded material.

Particle sizes D₁₀, D₅₀ and D₉₀ in 10% cumulative, 50% cumulative and 90% cumulative from the smaller particle side of cumulative particle size distribution of a powder of aluminum titanate were set to 25 µm, 30.2 µm and 34 µm, respectively, and the values were measured according to JIS R 1619-1995.

To this compounded material, graphite was added as a pore forming agent in the amount of 10% by mass based on 100% by mass of the compounded material. Thereafter, a plasticizer, a thickener, a lubricant and water were further added to obtain a slurry, using a rotary mill. Using a kneader, the slurry obtained by the rotary mill was kneaded to obtain a plasticized kneaded mixture.

Hereinafter, the method of forming a honeycomb structure 1 and the method of forming a plugging member 3 are the same as those described in Example 1.

Using an electric furnace, the green compact was fired at 1,440°C for 4 hours to obtain samples Nos. 19 and 20 each having a honeycomb structure measuring 144 mm in an outer diameter and 156 mm in a length in a checkered pattern in which the input end face (IF) and the output end face (OF) are respectively shown in Figs. 5 (a) and 5(b).

With respect to the green compact as sample No. 20, the aforementioned firing was carried out in a state where an aluminum oxide powder having the content of 99.5% by mass is in contact with the outer wall of the green compact.

The mean pore size of a porous material that respectively constitutes the partition wall 4 and the plugging member 3 was measured according to a mercury injection method, using a sample cut off from the outer peripheral side and center side of the honeycomb structure 1.

With respect to regeneration of the honeycomb structure 1, a sample that is different from that of the aforementioned honeycomb structure 1 was prepared. First, the input end face (IF) of each sample was connected to a diesel particulates generator (not shown) and then dry air (at a temperature of 25°C) containing particulates was directly injected from the diesel particulates generator at a flow rate of 2.27 Nm³/minute, and particulates were captured in the amount of 12 g based on the volume of 0.001 m³ of the honeycomb structure 1. Then, the thus captured particulates were regenerated by combusting and removing by an electric heater. In case the combustion temperature and the combustion time in this regeneration are adjusted to 700°C and 10 minutes, respectively, and also the amount of air fed to the honeycomb structure 1 is adjusted to 0.07 m³/minute, the region of particulates unburned on the outer peripheral side in the input end face (IF) is evaluated by a ratio R. The measured values are shown in Table 3 and Table 4.

**Table 3**

| No. | Partition wall | | | | | | | |
|---|---|---|---|---|---|---|---|---|
| | Particle size D₁₀ (µm) | Particle size D₅₀ (µm) | Particle size D₉₀ (µm) | Difference ΔD (µm) | Center side | | Outer peripheral side | |
| | | | | | Mean pore size (µm) | Half-value width (µm) | Mean pore size (µm) | Half-value width (µm) |
| 19 | 26 | 30.2 | 34 | 8 | 9 | 9.3 | 9 | 9.3 |
| 20 | 26 | 30.2 | 34 | 8 | 9 | 9.3 | 8 | 8.8 |

**Table 4**

| No. | Plug | | | | ged portion | | | | Ratio R (%) |
|---|---|---|---|---|---|---|---|---|---|
| | Particle size D₁₀ (µm) | Particle size D₅₀ (µm) | Particle size D₉₀ (µm) | Difference ΔD (µm) | Center side | | Outer peripheral side | | |
| | | | | | Mean pore size (µm) | Half-value width (µm) | Mean pore size (µm) | Half-value width (µm) | |
| 19 20 | 26 | 30.2 | 34 | 8 | 9 | 9.3 | 9 | 9.3 | 4.2 |
| | 26 | 30.2 | 34 | 8 | 9 | 9.3 | 9 | 9.3 | 3.6 |

As is apparent from Table 3 and Table 4, the porous material constituting a partition wall 4 of sample No. 20 exhibits a small ratio R of 3.6% since the mean pore size on the outer peripheral side is less than that on the center side, and thus lesser unburned particulates exist on the outer peripheral side and regeneration is more efficiently carried out.

### (Example 4)

With respect to a honeycomb structure made of a porous material in which a mean pore size of a plugging member 3 is 5 µm or more and 28 µm or less and a half-value width to a mean pore size in a pore distribution curve is 25 µm or less, it was observed whether or not a gap is formed between the plugging member 3 and the partition wall 4 on the input end face (IF).

First, 5 parts by mass of each of powders of magnesium oxide (MgO) and silicon dioxide (SiO₂) was mixed with 100 parts by mass of a powder of aluminum titanate to obtain a compounded material.

Particle sizes D₁₀, D₅₀ and D₉₀ in 10% cumulative, 50% cumulative and 90% cumulative from the smaller particle side of cumulative particle size distribution of a powder of aluminum titanate were set to 26 µm, 30.2 µm and 34 µm, respectively, and the values were measured according to JIS R 1619-1995.

To this compounded material, graphite was added as a pore forming agent in the amount of 10% by mass based on 100% by mass of the compounded material. Thereafter, a plasticizer, a thickener, a lubricant and water were further added to obtain a slurry, using a rotary mill. Using a kneader, the slurry obtained by the rotary mill was kneaded to obtain a plasticized kneaded mixture.

Hereinafter, the method of forming a honeycomb structure 1 and the method of forming a plugging member 3 are the same as those described in Example 1.

Using an electric furnace, the green compact was fired at 1,480°C for 4 hours to obtain a honeycomb structure 1 measuring 144 mm in an outer diameter and 156 mm in a length in a checkered pattern in which the input end face (IF) and the output end face (OF) are respectively shown in Figs. 5 (a) and 5(b).

The mean pore size and the half-value width of a porous material that respectively constitutes the partition wall 4 and the plugging member 3 were measured by a mercury injection method, using a sample cut off from the outer peripheral side of the honeycomb structure. The respective measured values of the mean pore size, the half-value width and the maximum pore diameter of a porous material constituting the plugging member 3 are shown in Table 5.

In Example 1, the mean pore size and the half-value width of the partition wall 4 of any sample were respectively 9 µm and 9.3 µm.

A gap between the plugging member 3 and the partition wall 4 on the input end face (IF) was observed using an optical microscope at a magnification of 100 times. The number of gaps is shown in Table 5.

**Table 5**

| No. | Particle size D₁₀ (µm) | Particle size D₅₀ (µm) | Particle size D₉₀ (µm) | Difference ΔD (µm) | Mean pore size (µm) | Half-value width (µm) | Maximum pore size (µm) | Number of gaps observed |
|---|---|---|---|---|---|---|---|---|
| 21 | 3.1 | 5.1 | 11.4 | 8.3 | 3 | 9.0 | 21.4 | 1 |
| 22 | 8 | 13.5 | 16.3 | 8.3 | 5 | 9.0 | 25.5 | 0 |
| 23 | 5.2 | 30.2 | 115.2 | 110 | 9 | 1.5 | 14.5 | 0 |
| 24 | 14.5 | 30.2 | 46.5 | 32 | 9 | 3.5 | 18.8 | 0 |
| 25 | 26 | 30.2 | 34 | 8 | 9 | 9.3 | 30.5 | 0 |
| 26 | 28.6 | 30.2 | 31.8 | 3.2 | 9 | 17.5 | 44.6 | 0 |
| 27 | 29.2 | 30.2 | 31.11 | 1.91 | 9 | 25.0 | 60.5 | 0 |
| 28 | 8 | 30.2 | 9.71 | 1.71 | 9 | 27.0 | 72.0 | 0 |
| 29 | 55.2 | 59.3 | 63.5 | 8.3 | 16 | 9.0 | 34.6 | 0 |
| 30 | 76.1 | 80.2 | 84.4 | 8.3 | 21 | 9.0 | 41.3 | 0 |
| 31 | 96.9 | 101.0 | 105.2 | 8.3 | 26 | 9.0 | 44.5 | 0 |
| 32 | 107 | 109.4 | 120 | 13 | 28 | 6.6 | 41.5 | 0 |
| 33 | 110.5 | 117.7 | 120.8 | 10.3 | 30 | 7.8 | 47.3 | 1 |

As shown in Table 5, since a plugging member 3 made of a porous material, in which a mean pore size is 5 µm or more and 28 µm or less and a half-value width to a mean pore size in a pore distribution curve is 25 µm or less, is used in samples Nos. 22 to 27 and 29 to 32, a gap which is likely to be formed between the plugging member 3 and the partition wall 4 is suppressed, and also the number of pores having an abnormally large size decreases. Thus, it is possible to increase capturing efficiency of particulates on a surface inside the plugging member 3.

### (Example 5)

A test of confirming a change in a ratio R caused by the fact that the mean pore size of the plugging member 3 on the outer peripheral side is less than that on the center side was carried out

First, 5 parts by mass of each of powders of magnesium oxide (MgO) and silicon dioxide (SiO₂) was added to 100 parts by mass of a powder of aluminum titanate to obtain a compounded material.

Particle sizes D₁₀, D₅₀ and D₉₀ in 10% cumulative, 50% cumulative and 90% cumulative from the smaller particle side of cumulative particle size distribution of a powder of aluminum titanate were set to 11 µm, 26 µm and 64 µm, respectively, and the values were measured according to JIS R 1619-1995.

To this compounded material, graphite was added as a pore forming agent in the amount of 10% by mass based on 100% by mass of the compounded material. Thereafter, a plasticizer, a thickener, a lubricant and water were further added to obtain a slurry, using a rotary mill. Using a kneader, the slurry obtained by the rotary mill was kneaded to obtain a plasticized kneaded mixture.

The mean pore size of a pore forming agent used to form pores of the plugging member 3 on the center side was the same as that on the outer peripheral side in sample No. 34, while the mean pore size on the outer peripheral side was less than that on center side in sample No. 35.

Hereinafter, the method of forming a honeycomb structure 1 and the method of forming a plugging member 3 are the same as those described in Example 1.

Using an electric furnace, the green compact was fired at 1,480°C for 4 hours to obtain a honeycomb structure measuring 144 mm in an outer diameter and 156 mm in a length in a checkered pattern in which the input end face (IF) and the output end face (OF) are respectively shown in Figs. 5 (a) and 5(b).

The porosity of the porous material constituting the plugging member 3 of the obtained honeycomb structure 1 was determined according to a mercury injection method. The measured values are shown in Table 6 and Table 7.

The pressure loss and the compression failure strength of the honeycomb structure 1 were measured in the same manner as that described in Example 1. The measured values are shown in Table 6 and Table 7.

**Table 6**

| No. | Partition wall | | | | | | | |
|---|---|---|---|---|---|---|---|---|
| | Particle size D₁₀ (µm) | Particle size D₅₀ (µm) | Particle size D₉₀ (µm) | Difference ΔD (µm) | Center side | | Outer peripheral side | |
| | | | | | Mean pore size (µm) | Half-value width (µm) | Mean pore size (µm) | Half-value width (µm) |
| 34 | 26 | 30.2 | 34 | 8 | 9 | 9.3 | 9 | 9.3 |
| 35 | 26 | 30.2 | 34 | 8 | 9 | 9.3 | 8 | 8.8 |

**Table 7**

| No. | Plugged portion | | | | | | | | Ratio R (%) |
|---|---|---|---|---|---|---|---|---|---|
| | Particle size D₁₀ (µm) | Particle size D₅₀ (µm) | Particle size D₉₀ (µm) | Difference ΔD (µm) | Center side | | Outer peripheral side | | |
| | | | | | Mean pore size (µm) | Half-value width (µm) | Mean pore size (µm) | Half-value width (µm) | |
| 34 | 26 | 30.2 | 34 | 8 | 9 | 9.3 | 9 | 9.3 | 4.2 |
| 35 | 26 | 30.2 | 34 | 8 | 9 | 9.3 | 9 | 9.3 | 3.6 |

As is apparent from the results shown in Table 6 and Table 7, the porous material constituting a plugging member 3 of sample No. 35 exhibits a small ratio R of 3.6% since the mean pore size on the outer peripheral side is less than that on the center side, and thus less unburned particulates exist on the outer peripheral side and regeneration is more efficiently carried out.

### Brief Description of Reference Symbols

- 1:: Honeycomb structure
- 2:: Flow path
- 3, 3a, 3b:: Plugged portions
- 4:: Partition wall
- 4a:: Wall face
- 5:: Outer wall
- 6:: Filter
- 7:: Heat insulating material layer
- 8:: Casing
- 9:: Inlet port
- 10:: Outlet port
- 11:: Exhaust pipe
- 20:: Exhaust gas purification device

## Claims

1. A honeycomb structure comprising:
a plurality of flow paths separated from each other by a partition wall including a wall face along an axial direction; plugging members plugging one end and the other end of the plurality of flow paths alternately; and
an outer wall disposed on the outer peripheral side of the plurality of flow paths,
wherein the partition wall is a porous material having a mean pore size of 5 µm or more and 28 µm or less and a half-value width relative to the mean pore size in a pore distribution curve of 25 µm or less (excluding 0 µm).

2. The honeycomb structure according to claim 1, wherein the porous material constituting the partition wall has a porosity of 32% or more and 58% or less.

3. The honeycomb structure according to claim 1 or 2, wherein, in the porous material constituting the partition wall, the mean pore size on the outer peripheral side is less than that on the center side.

4. The honeycomb structure as in one of claims 1 to 3, wherein the porous material constituting the partition wall is made of a sintered body containing aluminum titanate as a main component.

5. The honeycomb structure as in one of claims 1 to 4, wherein the plugging member is made of a porous material in which a mean pore size is 5 µm or more and 28 µm or less, and a half-value width to the mean pore size in a pore distribution curve is 25 µm or less (excluding 0 µm).

6. The honeycomb structure according to claim 5, wherein the porous material constituting the plugging member has a porosity of 32% or more and 58% or less.

7. The honeycomb structure according to claim 5 or 6, wherein, in the porous material constituting the plugging member, the mean pore size on the outer peripheral side is less than that on the center side.

8. The honeycomb structure as in one of claims 5 to 7, wherein the porous material constituting the plugging member is made of a sintered body containing aluminum titanate as a main component.

9. The honeycomb structure as in one of claims 1 to 8, wherein opened flow paths and plugged flow paths on the input side end face respectively have an octagon shape and a tetragon shape, and the area of the opened flow paths is larger than the area of the plugged flow paths.

10. The honeycomb structure as in one of claims 1 to 8, wherein both of opened flow paths and plugged flow paths on the input side end face have a tetragon shape, and the opened flow paths have an area larger than that of plugged flow paths and have corner portions formed in a circular arc shape.

11. A filter in which a catalyst is supported on a wall face of the partition wall of the honeycomb structure as in one of claims 1 to 10, an exhaust gas is passed through the filter from non-plugged one end of flow paths, as an input, to the non-plugged other end of flow paths, as an output, separated from the flow paths via the partition wall interposed there between, and particulates in the exhaust gas is captured on the partition wall.

12. An exhaust gas treatment device provided with the filter according to claim 11.

## Patentansprüche

1. Wabenstruktur, aufweisend:
eine Mehrzahl von Strömungswegen, welche voneinander durch eine Trennwand separiert sind, welche eine Wandfläche entlang einer axialen Richtung aufweist; wobei Verschlusselemente ein Ende und das andere Ende der Mehrzahl der Strömungswege abwechselnd verschließen; und
eine Außenwand, welche auf der äußeren peripheren Seite der Mehrzahl der Strömungswege angeordnet ist,
wobei die Trennwand ein poröses Material ist, welches eine mittlere Porengröße von 5µm oder mehr und 28µm oder weniger und eine Halbwertsbreite relativ zur mittleren Porengröße in einer Porenverteilungskurve von 28µm oder weniger (0µm ausgenommen) aufweist.

2. Wabenstruktur gemäß Anspruch 1, wobei das die Trennwand bildende poröse Material eine Porosität von 32% oder mehr und 58% oder weniger aufweist.

3. Wabenstruktur gemäß Anspruch 1 oder 2, wobei in dem die Trennwand bildenden porösen Material die mittlere Porengröße auf der äußeren peripheren Seite geringer ist als jene auf der Mittenseite.

4. Wabenstruktur wie in einem der Ansprüche 1-3, wobei das die Trennwand bildende poröse Material aus einem gesinterten Körper hergestellt ist, welcher Aluminiumtitanate als Hauptkomponente enthält.

5. Wabenstruktur wie in einem der Ansprüche 1-4, wobei das Verschlusselement aus einem porösen Material hergestellt ist, in welchem eine mittlere Porengröße 5µm oder mehr und 28µm oder weniger ist, und in einer Porenverteilungskurve eine Halbwertsbreite zur mittleren Porengröße 25µm oder weniger ist (0µm ausgenommen).

6. Wabenstruktur gemäß Anspruch 5, wobei das die Trennwand bildende poröse Material eine Porosität von 32% oder mehr und 58% oder weniger aufweist.

7. Wabenstruktur gemäß Anspruch 5 oder 6, wobei in dem das Verschlusselement bildenden porösen Material die mittlere Porengröße auf der äußeren peripheren Seite geringer ist als jene auf der Mittenseite.

8. Wabenstruktur wie in einem der Ansprüche 5-7, wobei das die Trennwand bildende poröse Material aus einem gesinterten Körper hergestellt ist, welcher Aluminiumtitanate als Hauptkomponente enthält.

9. Wabenstruktur wie in einem der Ansprüche 1-8, wobei geöffnete Strömungswege und verschlossene Strömungswege auf der einlassseitigen Stirnfläche jeweils eine oktagonale und eine tetragonale Form aufweisen, und die Fläche der geöffneten Strömungswege größer ist als die Fläche der verschlossenen Strömungswege.

10. Wabenstruktur wie in einem der Ansprüche 1-8, wobei beide aus geöffneten Strömungswegen und verschlossenen Strömungswegen auf der einlassseitigen Stirnfläche eine tetragonale Form aufweisen, und die geöffneten Strömungswege eine größere Fläche aufweisen als jene der verschlossenen Strömungswege und in einer kreisförmigen Bogenform ausgebildete Eckabschnitte aufweisen.

11. Filter, in welchem ein Katalysator auf einer Wandfläche der Trennwand der Wabenstruktur wie in einem der Ansprüche 1-10 getragen ist, wobei ein Abgas von dem nicht verschlossenen einen Ende von Strömungswegen als Einlass zu dem nicht verschlossenen anderen Ende von Strömungswegen als Auslass durch das Filter, separiert von den Strömungswegen durch die dazwischen eingefügte Trennwand, geleitet wird und an der Trennwand Partikel in dem Abgas eingefangen werden.

12. Abgasbehandlungsgerät versehen mit dem Filter gemäß Anspruch 11.

## Revendications

1. Structure en nid d'abeilles comprenant :
une pluralité de chemins d'écoulement séparés les uns des autres par une cloison de séparation qui comprend une face de paroi le long d'une direction axiale ;
des éléments de bouchage qui bouchent une extrémité et l'autre extrémité de la pluralité de chemins d'écoulement de manière alternée ; et
une paroi extérieure disposée sur le côté périphérique extérieur de la pluralité de chemins d'écoulement ;
dans laquelle la cloison de séparation est réalisée dans un matériau poreux qui présente une taille moyenne de pore égale ou supérieure à 5 µm et égale ou inférieure à 28 µm, et une largeur de demi-valeur par rapport à la taille moyenne de pore dans une courbe de distribution de pores, égale ou inférieure à 25 µm (à l'exclusion de la valeur 0 µm).

2. Structure en nid d'abeilles selon la revendication 1, dans laquelle le matériau poreux qui constitue la cloison de séparation présente une porosité égale ou supérieure à 32 % et égale ou inférieure à 58 %.

3. Structure en nid d'abeilles selon les revendications 1 ou 2, dans laquelle, dans le matériau poreux qui constitue la cloison de séparation, la taille moyenne de pore du côté périphérique extérieur est inférieure à celle du côté central.

4. Structure en nid d'abeilles selon l'une quelconque des revendications 1 à 3, dans laquelle le matériau poreux qui constitue la cloison de séparation est constitué d'un corps fritté qui contient du titanate d'aluminium en tant que composant principal.

5. Structure en nid d'abeilles selon l'une quelconque des revendications 1 à 4, dans laquelle l'élément de bouchage est réalisé dans un matériau poreux dans lequel la taille moyenne de pore est égale ou supérieure à 5 µm et égale ou inférieure à 28 µm, et la largeur de demi-valeur par rapport à la taille moyenne de pore dans une courbe de distribution de pores est égale ou inférieure à 25 µm (à l'exclusion de la valeur 0 µm).

6. Structure en nid d'abeilles selon la revendication 5, dans laquelle le matériau poreux qui constitue l'élément de bouchage présente une porosité égale ou supérieure à 32 % et égale ou inférieure à 58 %.

7. Structure en nid d'abeilles selon la revendication 5 ou la revendication 6, dans laquelle, dans le matériau poreux qui constitue l'élément de bouchage, la taille moyenne de pore du côté périphérique extérieur est inférieure à celle du côté central.

8. Structure en nid d'abeilles selon l'une quelconque des revendications 5 à 7, dans laquelle le matériau poreux qui constitue l'élément de bouchage est constitué d'un corps fritté qui contient du titanate d'aluminium en tant que composant principal.

9. Structure en nid d'abeilles selon l'une quelconque des revendications 1 à 8, dans laquelle les chemins d'écoulement ouverts et les chemins d'écoulement bouchés sur la face d'extrémité latérale d'entrée présentent respectivement une forme octogonale et une forme tétragonale, et la surface des chemins d'écoulement ouverts est plus grande que la surface des chemins d'écoulement bouchés.

10. Structure en nid d'abeilles selon l'une quelconque des revendications 1 à 8, dans laquelle les chemins d'écoulement ouverts et les chemins d'écoulement bouchés sur la face d'extrémité latérale d'entrée présentent une forme tétragonale, et les chemins d'écoulement ouverts présentent une surface plus grande que celle des chemins d'écoulement bouchés, et présentent des parties en coins formées en une forme d'arc circulaire.

11. Filtre dans lequel un catalyseur est supporté sur une face de paroi de la cloison de séparation de la structure en nid d'abeilles selon l'une quelconque des revendications 1 à 10, les gaz d'échappement passent à travers le filtre à partir d'une extrémité non bouchée des chemins d'écoulement, en tant qu'entrée, vers l'autre extrémité non bouchée des chemins d'écoulement, en tant que sortie, séparées des chemins d'écoulement par l'intermédiaire de la cloison de séparation interposée entre celles-ci, et les substances particulaires présentes dans les gaz d'échappement sont captées sur la cloison de séparation.

12. Dispositif de traitement des gaz d'échappement doté d'un filtre selon la revendication 11.
